# EUROPÄISCHE PATENTSCHRIFT

(11) **EP 2 157 590 B1**
(45) Veröffentlichungstag und Bekanntmachung des Hinweises auf die Patenterteilung: **09.03.2011**
(21) Anmeldenummer: 08162664.0
(22) Anmeldetag: 20.08.2008
(51) Int. Cl.: H01H 9/52

(54) **Hochspannungsschalter mit Kühlung**
High voltage switch with cooling
Commutateur haute tension doté d'un refroidissement

(43) Veröffentlichungstag der Anmeldung: 24.02.2010
(73) Patentinhaber: ABB Technology AG, 8050 Zürich (CH)
(72) Erfinder: Mauroux, Jean-Claude, 5502 Hunzenschwil (CH); Steding, Guenter, 79807 Lottstetten (DE); Lakner, Martin, 5412 Gebenstorf (CH); Widmer, Bruno, 8645 Jona (CH)
(74) Vertreter: ABB Patent Attorneys

(56) Entgegenhaltungen:
- EP-A- 1 496 534
- US-A- 3 769 551
- US-A- 4 005 297

## Beschreibung

### Technisches Gebiet

Die Erfindung bezieht sich auf das Gebiet der Hochspannungstechnik und betrifft einen Hochspannungsschalter nach dem Oberbegriff von Patentanspruch 1. Ein solcher Schalter ist im allgemeinen als Leistungs-, Last- oder Trennschalter ausgebildet und weist einen oder mehrere Stromleiter eines mehrphasigen Wechselstroms auf, eine den oder die Stromleiter aufnehmende Metallkapselung und mindestens ein Kühlelement mit dem bei der Betrieb des Schalters in einer Hochspannungsanlage infolge von Stromverlusten im Stromleiter oder in den Stromleitern erzeugte Wärme aus der Kapselung entfernt wird. Ist der Schalter für eine mit hohen Ströme belastete Anlage, etwa eine Generatorableitung bestimmt, so führt er bei Nennspannungen zwischen 1 und 70 kV Nennströme, die typischerweise zwischen 6 kA und 40 kA liegen. Wird er in einer gasisolierten gekapselten Schaltanlage eines Hochspannungsnetzes eingesetzt, so führt er bei Nennspannungen zwischen 70 und 800 kV Nennströme von typischerweise 2 bis 6 kA.

Bei den genannten Strömen kommt es aufgrund von ohmschen Verlusten zu einer starken Erwärmung des zumeist rohrförmigen Stromleiters. Der Stromleiter umfasst im allgemeinen die Nennstrombahn des Hochspannungsschalters, da dort infolge von Kontaktstellen grössere Stromverluste und damit auch eine grössere Wärmebildung als im Material des Stromleiters auftritt. Während des Nennstrombetriebes darf im Schalter eine durch Normen vorgegebene Höchsttemperatur, beispielsweise 105°C, und somit eine sich daraus ergebende maximale Temperaturerhöhung, beispielsweise 65°C, nicht überschritten werden, wodurch der maximale Nennstrom des Schalters limitiert ist. Um die Betriebstemperatur des Stromleiters unterhalb der zulässigen Höchsttemperatur zu halten, wird daher die Verlustwärme durch Kühlen des Stromleiters aus der Anlage entfernt.

### Stand der Technik

Ein als Schalterpol eines dreipoligen Generatorschalters ausgebildeter Hochspannungsschalter der eingangs genannten Art ist in EP 1 496 534 B1 und EP 1 657 731 A1 beschrieben. Dieser Schalter weist einen in einer Metallkapselung angeordneten Phasenleiter auf, der sich bei Betrieb des Schalters in einer Generatorableitung infolge von ohmschen Stromverlusten erwärmt. Daher enthält der Hochspannungsschalter ein Kühlelement mit einem auf der Metallkapselung gehaltenen Kühler. Der Kühler ist auf einem als Montageplatte ausgeführten Teil der Kapselung befestigt und weist ausserhalb der Kapselung angeordnete Kühlrippen weist. Die im Phasenleiter gebildete Wärme wird dem Kühler durch in der Kapselung vorhandene Luft (EP 1 496 534 B1) oder durch den Dampfes einer am Phasenleiter verdampften Flüssigkeit (EP 1 657 731 A1) zugeführt. Die durch Abkühlen der Luft resp. durch Kondensation des Dampfs abgegebene Wärme wird vom Kühler aufgenommen und über die Kühlrippen an die Umgebungsluft abgegeben. Es wird so bei praktisch unveränderten Abmessungen eine erhöhte Stromtragfähigkeit des Schalters erreicht.

Weitere mehrpolige Schalter sind in US 3,769'551 und US 4,005'297 beschrieben, Die Schalter sind jeweils in einer Metallkapselung angeordnet. Jeder Schalterpol dieser Schalter weist einen stromführenden Innenleiter auf, dessen Verlustwärme von einem Kühlelement aufgenommen wird Das Kühlelement ist wie in EP 1 657 731 A1 beschrieben als Wärmerohr ausgebildet und weist daher einen Kühler mit Kühlrippen auf, die jedoch im Unterschied zu diesem Stand der Technik, aber auch zum Stand der Technik nach EP 1 496 534 B1 im Inneren der Metallkapselung angeordnet sind.

### Darstellung der Erfindung

Es ist Aufgabe der Erfindung, einen Hochspannungsschalter der eingangs genannten Art zu schaffen, welcher sich trotz einfachem Aufbau und unverändert beibehaltenen Abmessungen der Metallkapselung durch eine erhöhte Nennstromtragfähigkeit auszeichnet.

Beim Hochspannungsschalter nach der Erfindung ist in einem als Kühlblock ausgebildeten Abschnitt des Kühlers mindestens ein Teil der Kühlrippen parallel zu einer Montageplatte der Metallkapselung angeordnet und derart an einem an der Montageplatte befestigten und als Platte ausgebildeten Wärmeverteiler gehalten, dass zu beiden Seiten des Wärmeverteilers jeweils eine von zwei Gruppen von Kühlkanälen entsteht, in der die Kühlkanäle jeweils nach Art eines Sandwichs angeordnet und gegenüber der Horizontalen geneigt ausgerichtet sind.

Hierdurch wird die Effizienz des Kühlers erhöht, da wegen der gegen die Horizontale geneigten Anordnung der Kühlkanäle Kaminwirkung erreicht wird. Am oberen Ende der Kühlkanäle ausströmende erwärmte Luft wird hierbei kontinuierlich durch kühle Umgebungsluft ersetzt, die am unteren Ende der Kühlkanäle angesaugt wird und dabei Wärme aus den Kühlrippen aufnimmt. Da dieser Kühlprozess vor allem durch thermische Parameter der Anlage, wie der Differenz zwischen der Temperatur der Kühlrippen und der Temperatur der Aussenluft, bestimmt ist, ist dieser Prozess nahezu unabhängig von schwer zu berücksichtigenden äusseren Störeinflüssen, wie dem Wind und der Sonneneinstrahlung. Es wird somit auch bei schwachem Wind oder bei starker Sonneneinstrahlung eine gut entwickelte Kühlluftströmung durch den Kühler erreicht. Daher wird beim Hochspannungsschalter nach der Erfindung mehr Wärme abgeführt als bei einem Hochspannungsschalter nach dem Stand der Technik mit einem Kühler, bei dem die Kühlrippen unmittelbar an der Aussenseite der Metallkapselung angeordnet sind und im allgemeinen mit der Aussenseite der Metallkapselung einen rechten Winkel bilden.

Wegen der Sandwich-Bauweise sind die Kühlrippen zudem nicht unmittelbar dem Einfluss der Umgebung ausgesetzt und verschmutzen daher wesentlich weniger als die Kühlrippen bei einem Hochspannungsschalter nach dem Stand der Technik. Zudem wird durch die Sandwich-Bauweise ein sehr kompakt ausgebildeter Kühler erreicht, der bei gleichem Volumen eine grössere Oberfläche und damit auch einen höheren Wirkungsgrad als ein Kühler aufweist, der in einem Schalter nach dem Stand der Technik eingebaut ist. Diese vorteilhaften Wirkungen des erfindungsgemässen Schalters sind von besonderem Vorteil, wenn als Kühlelement ein Wärmerohr eingesetzt wird, da dann ein Versagen des Wärmerohrs wegen zu geringer Leistung seines Kühlers infolge ungünstiger Umgebungseinflüsse, wie etwa zu geringem Wind oder zu starker Sonneneinstrahlung, vermieden wird.

Ist beim Schalter nach der Erfindung der Wärmeverteiler mit einer aus den Kühlrippen ragenden Kante an der Montageplatte festgesetzt, so wird die im Stromleiter erzeugte Wärme besonders gleichmässig im zugeordneten Kühlblock verteilt. Da der Platte radial zur Metallkapselung ausreichend Raum zur Verfügung steht, kann eine grosse Wärmemenge an die Umgebungsluft abgegeben werden und kann so ein grösserer Nennstrom geführt werden.

Ist in die Kante, beispielsweise durch spanabhebendes Bearbeiten, wie insbesondere Fräsen, ein durch die Montageplatte geführtes Befestigungselement eingeformt, so kann der Kühlblock bei der Fertigung des Kühlers in fertigungstechnisch günstiger Weise, vorzugsweise durch Schweissen, an der Montageplatte festgesetzt werden.

Die im Stromleiter gebildete Wärme kann vom Stromleiter typischerweise durch Strahlung, Konvektion eines Isoliergases, wie insbesondere Luft, in der Metallkapselung, Zwangsumwälzung des Isoliergases in der Metallkapselung oder durch Kondensation des Dampfes einer am Stromleiter verdampften Flüssigkeit zum Kühler gelangen. Gelangt die Wärme durch Kondensation des Dampfs einer am Stromleiter verdampften Flüssigkeit zum Kühler, beispielsweise mit einem Wärmerohr, so empfiehlt es sich, dass der Wärmeverteiler einen Hohlraum zur Kondensation des die Wärme aus der Metallkapselung in den Kühler transportierenden Dampfes aufweist. Aus fertigungstechnischen Gründen ist es dann vorteilhaft, wenn in die Kante eine durch die Montageplatte geführte und mit der Montageplatte starr verbundene hohle Nase eingeformt ist, die den Hohlraum mit einem im Inneren der Kapselung angeordneten Verdampfer des Kühlelements verbindet. Es kann dann zum einen der Wärmeverteiler und damit der zugeordnete Kühlblock mit dieser Nase in eine Öffnung der Montageplatte eingepasst und etwa durch Schweissen an der Montageplatte vakuumdicht festgesetzt werden. Zum anderen ist dann aber auch zugleich eine vakuumdichte Verbindung für den Dampf und die Flüssigkeit zwischen dem Hohlraum des Wärmeverteilers und dem Verdampfer erreicht.

In einem für eine Massenfertigung geeigneten und daher besonders kostengünstigen Verfahren zur Herstellung eines Kühlblocks sollte der Wärmeverteiler und der am Wärmeverteiler befestigte Teil der Kühlrippen als stranggepresstes Hohlprofil ausgeführt sein. Der Kühlblock kann dann besonders einfach aus diesem Hohlprofil hergestellt werden, wenn er einen abgelängten und stirnseitig mit Verschlussblechen vakuumdicht verschweissten Abschnitt dieses Profils aufweist.

Um einen besonders wirkungsvolle Kühlleistung zu erreichen, sind mit Vorteil an der Montageplatte mindestens zwei weitgehend gleichartig ausgebildete Kühlblöcke befestigt, und ist an der von den Kühlblöcken abgewandten Seite der Montageplatte ein hohler Sammelkanal gehalten, der mit dem Verdampfer und mit dem Hohlraum jedes der beiden Kühlblöcke vakuumdicht verbunden ist.

Um einen sicheren Betrieb des Kühlers und damit des Hochspannungsschalters nach der Erfindung zu gewährleisten, weist der Sammelkanal einen vakuumdicht mit dem Verdampfer verbundenen Rohrstutzen auf sowie mindestens ein hohl ausgebildetes Verbindungsstück zum vakuumdichten Anschliessen eines Hilfsgeräts, beispielsweise einer Servicevorrichtung und/oder eines Filters.

Dadurch, dass an den vom Sammelkanal abgewandten Enden eines der Kühlblöcke ein ausserhalb der Kapselung angeordneter Verbindungskanal angebracht ist, der die Hohlräume der Wärmeverteiler miteinander verbindet, wird die Zirkulation von Dampf und Flüssigkeit im Kühler erleichtert und damit die Kühlleistung des Kühlers erhöht. Daher wird so zusätzlich Wärme aus der Metallkapselung abgeführt und kann dementsprechend der Hochspannungsschalter nach der Erfindung mit einem noch höheren Nennstrom belastet werden.

### Kurze Beschreibung der Zeichnungen

Anhand von Zeichnungen wird nachfolgend ein Ausführungsbeispiel der Erfindung näher erläutert. Hierbei zeigt:
- Fig. 1: eine Aufsicht auf einen Schnitt durch eine als Schalterpol eines dreipoligen Generatorschalters ausgebildete, schematisch dargestellte Ausführungsform des Hochspannungsschalters nach der Erfindung,
- Fig. 2: in perspektivischer Darstellung einen auf einer Montageplatte befestigten Kühler, der links einer Trennlinie T in den Schalterpol nach Fig. 1 eingebaut ist,
- Fig. 3: eine Draufsicht auf den Kühler nach Fig. 2,
- Fig. 4: in vergrösserter Darstellung eine Draufsicht auf einen Kühlblock, der im Kühler nach den Figuren 2 und 3 enthalten ist, und
- Fig. 5: eine in Pfeilrichtung geführte Aufsicht auf einen längs V - V geführten Schnitt durch den Kühler nach Fig. 3.

Die in den Zeichnungen verwendeten Bezugszeichen und deren Bedeutung sind in der Bezugszeichenliste zusammengefasst. Grundsätzlich sind in den Figuren gleiche oder gleichwirkende Teile mit gleichen Bezugszeichen versehen. Für das Verständnis der Erfindung nicht wesentliche Teile sind zum Teil nicht dargestellt. Das beschriebene Ausführungsbeispiele steht beispielhaft für den Erfindungsgegenstand und hat keine beschränkende Wirkung.

### Wege zur Ausführung der Erfindung

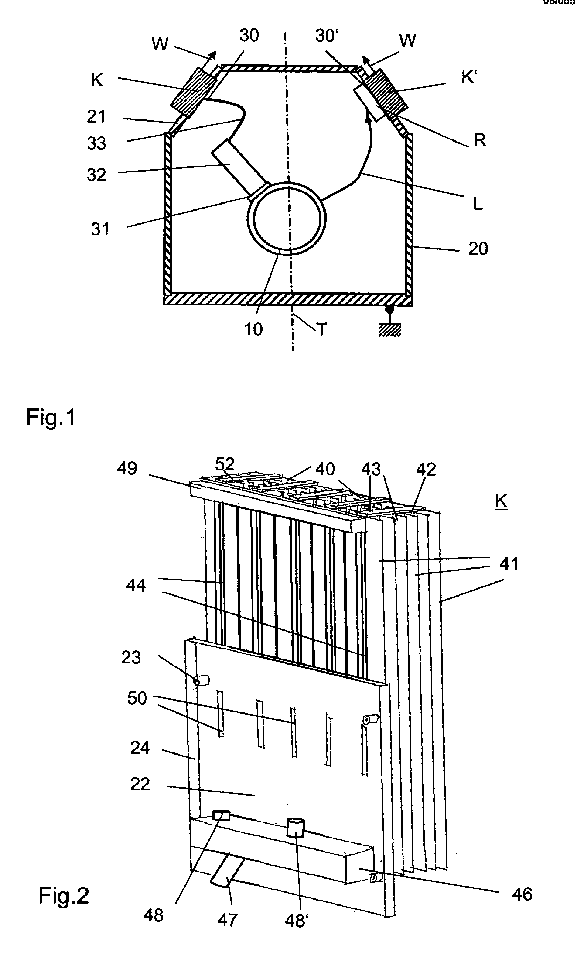

Der in Fig. 1 dargestellte Schalterpol weist einen rohrförmigen Stromleiter 10 auf, der von einer nach Art eines Hauses ausgebildeten, luftgefüllten Metallkapselung 20, vorzugsweise auf der Basis von Aluminium, umschlossen ist. Während des Betriebs in einer Generatorableitung liegt zwischen der auf einem definierten Potential, beispielsweise Erdpotential, gehaltenen, stromleitenden Kapselung 20 und dem Stromleiter 10 Hochspannung von typischerweise 10 bis 40 kV an und führt der Stromleiter einen hohen Betriebsstrom von typischerweise 6 bis 40 kV. Bedingt durch ohmsche Verluste im Material des Stromleiters 10 und an Kontaktstellen des Schalterpols, wie Nennstromkontakten, erwärmt sich der Stromleiter 10 typischerweise auf mehr als 100°C.

Zur Abführung der Verlustwärme wird der Stromleiter 10 mit zwei Kühlelementen 30, 30' gekühlt, von denen das links einer Trennlinie T dargestellte Kühlelement 30 als Wärmerohr und das rechts der Trennlinie dargestellte Kühlelement 30' die durch einen Pfeil L gekennzeichnete Thermik der in der Metallkapselung erwärmten Luft zur Wärmeübertragung ausnutzt. Jedes Kühlelement 30, 30' enthält einen auf der Kapselung 20 gehaltenen Kühler K, K', der Wärme W an die Umgebungsluft abgibt. Das als Wärmerohr ausgebildete Kühlelement 30 enthält ein flüssiges Arbeitsmedium, welches in seiner flüssigen Phase in einem als Verdampfer 31 bezeichneten Abschnitt des Wärmerohres unter Aufnahme der im Stromleiter gebildeten Verlustwärme verdampft und deren so gebildeter Dampf in einem den Kühler K umfassenden Abschnitt des Wärmerohrs unter Abgabe von Kondensationswärme kondensiert. Das Wärmerohr weist ferner einen hohlen Isolator 32 auf, welcher der elektrischen Isolation zwischen dem Verdampfer 31 und dem Kühler K resp. einem mit einem Hohlraum des Kühlers verbundenen flexiblen Schlauch 33 dient und die Führung des Arbeitsmediums in der flüssigen und gasförmigen Phase ermöglicht. Die Kühler K und K' sind jeweils an einer Dachschräge 21 der Metallkapselung 20 angeordnet und stehen jeweils in thermischem Kontakt mit der Umgebungsluft, so dass ein effizientes Abführen der Wärme möglich ist.

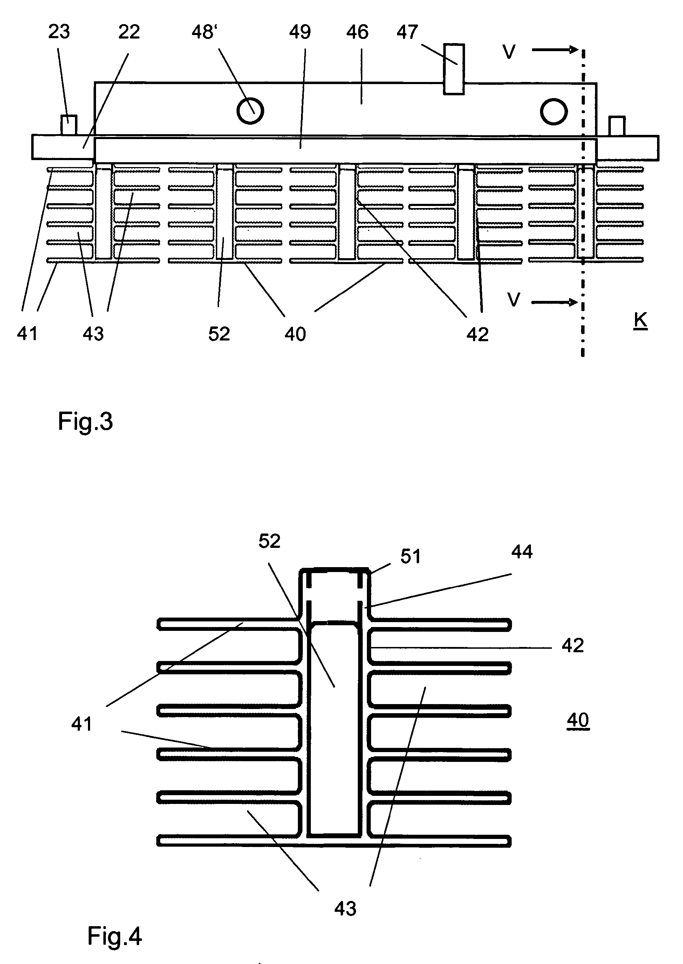

Der Aufbau des Kühlers K ist aus den Figuren 2 bis 5 ersichtlich. Den Figuren 2 bis 4 kann entnommen werden, dass der Kühler K auf einem als Montageplatte 22 ausgeführten Teil der Kapselung 20 befestigt ist. Die Montageplatte 22 weist ersichtlich Distanzstücke 23 auf, mit denen die Platte und damit auch der Kühler K im Bereich der Dachschräge 21 weitgehend luftdicht an der Metallkapselung 20 angeschraubt sind, sowie eine die Plattenebene überragende und das Innere der Kapselung zusätzlich schützende Umrandung 24.

Der Kühler K enthält ersichtlich fünf nebeneinander an der Montageplatte 22 befestigte, weitgehend gleichartig ausgebildete Kühlblöcke 40. Anstelle von fünf können natürlich auch mehr oder weniger Kühlblöcke 40 vorgesehen sein. Jeder Kühlblock 40 weist ausserhalb der Kapselung angeordnete Kühlrippen 41 auf, die parallel zur Montageplatte 22 angeordnet sind. Die Kühlrippen 41 sind an einem rechtwinklig zu den Kühlrippen 41 erstreckten und als Platte ausgebildeten Wärmeverteiler 42 gehalten. Zu beiden Seiten des Wärmeverteilers 42 entsteht so jeweils eine von zwei Gruppen von Kühlkanälen 43, welche nach Art eines Sandwich angeordnet und gegenüber der Horizontalen geneigt ausgerichtet sind. Da die Montageplatte 22 an der Dachschräge 21 der Metallkapselung 2 befestigt ist, ist der Neigungswinkel der Kühlkanäle 43 durch die Neigung der Dachschräge 21 bestimmt. Jeder der Wärmeverteiler 42 enthält eine aus den Kühlrippen 41 ragende Kante 44, die den gleichen Neigungswinkel wie die Kühlkanäle 43 aufweist und sich parallel zur Dachschräge 21 resp. den Kühlkanälen 43 erstreckt.

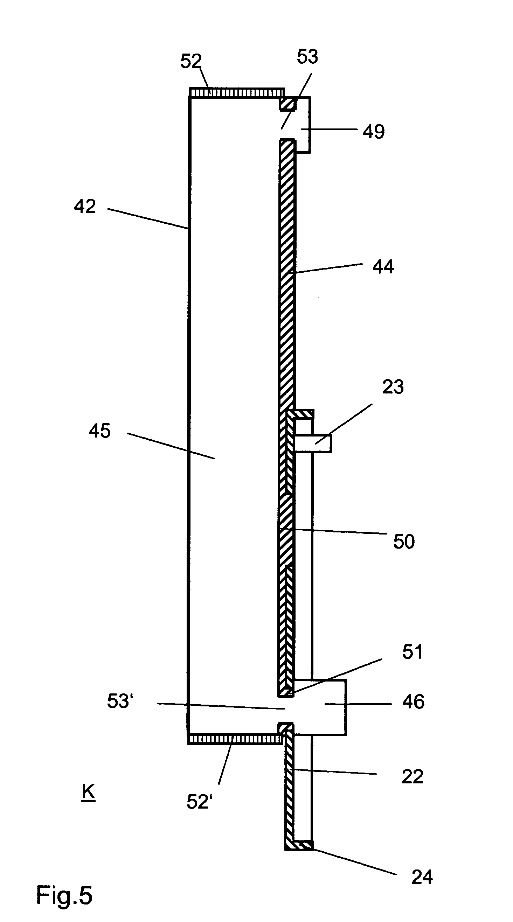

Die Wärmeverteiler 42 sind hohl ausgebildet und enthalten jeweils einen aus Fig.5 ersichtlichen Hohlraum 45. Die Hohlräume 45 der fünf Wärmeverteiler 42 sind an den unteren Enden der Wärmeverteiler 42 resp. der Kühlblöcke 40 mit einem vorwiegend horizontal erstreckten Sammelkanal 46 verbunden. Wie aus Fig.2 ersichtlich ist, weist der Sammelkanal 46 an seiner Unterseite einen Rohrstutzen 47 auf, der mit dem aus Fig.1 ersichtlichen flexiblen Schlauch 33 verbunden ist. Auf der Oberseite des Sammelkanals 46 sind Verbindungsstücke 48, 48' jeweils zum vakuumdichten Anschliessen eines Hilfsgerätes vorgesehen. An das Verbindungsstück 48 kann beispielsweise ein der Versorgung, Überwachung und Wartung des Kühlelements 30 dienendes Servicegerät angeschlossen werden, mit dem der Sammelkanal 46 und die damit kommunizierenden Hohlräume in den Kühlblöcken 40, der flexible Schlauch 33, der Isolator 32 und der Verdampfer 31 evakuiert werden können und Arbeitsmedium in das Kühlelement 30 eingefüllt oder aus dem Kühlelement 30 entfernt werden kann. In das Verbindungsstück 48' kann beispielsweise ein der Reinhaltung des Arbeitsmediums dienendes Filter eingesetzt werden. Die Hohlräume 45 sind an den oberen Enden der Wärmeverteiler 42 resp. der Kühlblöcke 40 mit einem vorwiegend horizontal erstreckten Verbindungskanal 49 verbunden.

Fig.5 kann entnommen werden, dass in die Kante 44 ein durch die Montageplatte 22 geführtes und mit der Montageplatte starr verbundenes Befestigungselement 50 sowie eine ebenfalls durch die Montageplatte geführte und mit der Montageplatte starr verbundene hohle Nase 51 eingeformt ist. Die Nase 51 verbindet den Hohlraum 45 mit dem Sammelkanal 46 und damit auch mit dem im Inneren der Kapselung 20 angeordneten Verdampfer 31 des Kühlelements 30.

Bei der Herstellung des Kühlers K wird zunächst ein den Wärmeverteiler 42 und die Kühlrippen 41 enthaltendes stranggepresstes Hohlprofil abgelängt. In die über die Kühlrippen 41 vorstehende Kante 44 werden das Befestigungselement 50 und die Nase 51 gefräst und Durchlässe 53, 53' gebohrt, die den Sammelkanal 46 und den Verbindungskanal 49 mit dem Hohlraum 45 verbinden. Der Hohlraum 45 des so vorbereiteten Profils wird unter Fertigstellung des Kühlblocks 40 stirnseitig mit zwei Verschlussblechen 52, 52' vakuumdicht verschweisst. Das Befestigungselement 50 und die hohle Nase 51 werden durch passgenau gefertigte Öffnungen in der Montageplatte 22 gesteckt und der Kühlblock 40 durch umlaufendes Verschweissen der durchgesteckten Teile 50 und 51 an der Montageplatte 22 festgesetzt. Nach Festsetzen aller fünf Kühlblöcke 40 wird an der Innenseite der Montageplatte 22 der Sammelkanal 46 angeschweisst. Da der Verbindungsweg für das Arbeitsmedium vom Verdampfer 31 zum Hohlraum 45 vakuumdicht sein muss, sind die hohle Nase 51 und der Sammelkanal 46 vakuumdicht mit der Montageplatte 22 verschweisst. Der gegebenenfalls vorgesehene Verbindungskanal 49 wird im Bereich der Durchlässe 53 vakuumdicht mit dem oberen Enden der Kühlblöcke 40 verschweisst. Die den Kühler K tragende Montageplatte 22 wird an der Dachschräge 21 des Gehäuses 20 mit Hilfe von Montageschrauben befestigt, die in die Distanzstücke 23 eingreifen.

Anstelle eines als Wärmerohr ausgebildeten Kühlelements 30 kann auch das Kühlelement 30' in den Schalter nach der Erfindung eingebaut sein. Bei diesem Kühlelement ist der Kühler K' jedoch nicht hohl ausgebildet, sondern weist in den Innenraum geführte Rippen R auf (aus Fig. 1 ersichtlich), die die durch Konvektion transportierte Wärme aufnehmen und an die entsprechend dem Kühler K ausgebildeten und angeordneten Kühlrippen nach aussen leitet.

Bei Betrieb des Hochspannungsschalters nach der Erfindung wird die im Stromleiter 10 erzeugte Wärme an den Kühler K resp. K' des Kühlelements 30 bzw. 30' geführt. Beim Kühlelement 30 wird das im Verdampfer 31 verdampfte Arbeitsmedium über den hohlen Isolator 32, den flexiblen Schlauch 33 und den Rohrstutzen 47 in den Sammelkanal 46 geführt und von dort in die Hohlräume der Wärmeverteiler 42 verteilt. Der Dampf kondensiert unter Abgabe von Kondensationswärme in den Hohlräumen des Kühlers K . Das Kondensat fliesst infolge der Schwerkraft wieder zurück zum Verdampfer 31. Durch den Verbindungskanal 49 wird eine besonders gleichmässige Verteilung des einströmenden Dampfs in den einzelnen Hohlräumen 45 und damit eine besonders gute Kühlleistung erreicht. Beim Kühlelement 30' gelangt die Wärme durch thermische Konvektion L der in die Metallkapselung 20 eingeschlossenen erwärmten Luft an den Kühler K'.

Dadurch, dass bei beiden Kühlern K und K' die Kühlrippen 41 parallel zur Montageplatte 22 und damit auch zur Dachschräge 21 der Metallkapselung 20 angeordnet und derart an einem an der Montageplatte 22 befestigten Wärmeverteiler 42 gehalten sind, dass zu beiden Seiten des Wärmeverteilers jeweils nach Art eines Sandwichs angeordnete und gegenüber der Horizontalen geneigt ausgerichtete Kühlkanäle 43 entstehen, wird der Wirkungsgrad des Kühlers K bzw. K' wirksam erhöht. Es wird nun in den Kühlkanälen 43 Kaminwirkung erreicht. Am oberen Ende der Kühlkanäle 43 ausströmende erwärmte Luft wird kontinuierlich durch kühle Umgebungsluft ersetzt, die am unteren Ende der Kühlkanäle 43 angesaugt wird und dabei Wärme W aus den Kühlrippen 41 aufnimmt. Da dieser Kühlprozess vor allem durch thermische Parameter der Anlage, wie der Differenz zwischen der Temperatur der Kühlrippen und der Temperatur der Aussenluft, bestimmt ist, ist dieser Prozess nahezu unabhängig von sonst schwer zu berücksichtigenden äusseren Störeinflüssen, wie dem Wind und der Sonneneinstrahlung. Es wird somit auch bei schwachem Wind oder bei starker Sonneneinstrahlung eine gut entwickelte Kühlluftströmung durch den Kühler K resp. K' erreicht. Daher wird beim Hochspannungsschalter nach der Erfindung mehr Wärme abgeführt wird als bei einem Hochspannungsschalter nach dem Stand der Technik. Wegen der Sandwich-Bauweise sind die Kühlrippen zudem nicht unmittelbar dem Einfluss der Umgebung ausgesetzt und verschmutzen daher wesentlich weniger als die Kühlrippen beim Hochspannungsschalter nach dem Stand der Technik. Zudem wird durch die Sandwich-Bauweise ein sehr kompakt ausgebildeter Kühler erreicht, der bei gleichem Volumen eine grössere Oberfläche und damit auch einen höheren Wirkungsgrad als ein Kühler aufweist, der in einem Schalter nach dem Stand der Technik eingebaut ist.

### Bezugszeichenliste

- 10: Stromleiter
- 20: Metallkapselung
- 21: Dachschräge
- 22: Montageplatte
- 23: Distanzstücke
- 24: Umrandung
- 30, 30': Kühlelemente
- 31: Verdampfer
- 32: Isolator
- 33: flexibler Schlauch
- 40: Kühlblöcke
- 41: Kühlrippen
- 42: Wärmeverteiler
- 43: Kühlkanäle
- 44: Kante
- 45: Hohlraum
- 46: Sammelkanal
- 47: Rohrstutzen
- 48, 48': Verbindungsstücke
- 49: Verbindungskanal
- 50: Befestigungselement
- 51: hohle Nase
- 52, 52': Verschlussbleche
- 53: Durchlässe
- K, K': Kühler
- L: Thermik der in der Metallkapselung eingeschlossenen Luft,
- R: Rippen
- T: Trennlinie
- W: vom Kühler abgegebene Wärme

## Patentansprüche

1. Gekapselter Hochspannungsschalter, enthaltend einen Wärme erzeugenden Stromleiter (10), eine den Stromleiter (10) umgebende Metallkapselung (20) und ein Kühlelement (30, 30') mit einem Kühler (K, K'), der auf einem als Montageplatte (22) ausgeführten Teil der Kapselung (20) befestigt ist und ausserhalb der Kapselung angeordnete Kühlrippen (41) aufweist, **dadurch gekennzeichnet, dass** in einem als Kühlblock (40) ausgebildeten Abschnitt des Kühlers mindestens ein Teil der Kühlrippen (41) parallel zur Montageplatte (22) angeordnet und derart an einem an der Montageplatte befestigten und als Platte ausgebildeten Wärmeverteiler (42) gehalten ist, dass zu beiden Seiten des Wärmeverteilers (42) jeweils eine von zwei Gruppen von Kühlkanälen (43) entsteht, in der die Kühlkanäle (43) jeweils nach Art eines Sandwichs angeordnet und gegenüber der Horizontalen geneigt ausgerichtet sind.

2. Schalter nach Anspruch 1, **dadurch gekennzeichnet, dass** der Wärmeverteiler (42) mit einer aus den Kühlrippen (43) ragenden Kante (44) an der Montageplatte (22) festgesetzt ist.

3. Schalter nach Anspruch 2, **dadurch gekennzeichnet, dass** in die Kante (44) ein durch die Montageplatte (22) geführtes und mit der Montageplatte starr verbundenes Befestigungselement (50) eingeformt ist.

4. Schalter nach einem der Ansprüche 2 oder 3, **dadurch gekennzeichnet, dass** der Wärmeverteiler (42) einen Hohlraum (45) zur Kondensation eines die Wärme aus der Kapselung (20) in den Kühler (K) transportierenden Dampfes aufweist.

5. Schalter nach Anspruch 4, **dadurch gekennzeichnet, dass** in die Kante (44) eine durch die Montageplatte (22) geführte und mit der Montageplatte starr verbundene hohle Nase (51) eingeformt ist, die den Hohlraum (45) mit einem im Inneren der Kapselung (20) angeordneten Verdampfer (31) des Kühlelements (30) verbindet.

6. Schalter nach einem der Ansprüche 4 oder 5, **dadurch gekennzeichnet, dass** der Wärmeverteiler (42) und der am Wärmeverteiler befestigte Teil der Kühlrippen (41) als stranggepresstes Hohlprofil gefertigt sind.

7. Schalter nach Anspruch 6, **dadurch gekennzeichnet, dass** der Kühlblock (40) einen abgelängten und stirnseitig mit Verschlussblechen (52, 52') vakuumdicht verschweissten Abschnitt des stranggepressten Profils aufweist.

8. Schalter nach einem der Ansprüche 4 bis 7, **dadurch gekennzeichnet, dass** an der Montageplatte (20) mindestens zwei weitgehend gleichartig ausgebildete Kühlblöcke (40) befestigt sind, und dass an der von den Kühlblöcken (40) abgewandten Seite der Montageplatte (22) ein hohler Sammelkanal (46) gehalten ist, der mit dem Hohlraum (45) jedes der beiden Kühlblöcke (40) und mit dem Verdampfer (31) vakuumdicht verbunden ist.

9. Schalter nach Anspruch 8, **dadurch gekennzeichnet, dass** der Sammelkanal (46) einen vakuumdicht mit dem Verdampfer (31) verbundenen Rohrstutzen (47) aufweist sowie mindestens ein hohl ausgebildetes Verbindungsstück (48, 48') zum vakuumdichten Anschliessen eines Hilfsgeräts.

10. Schalter nach einem der Ansprüche 8 oder 9, **dadurch gekennzeichnet, dass** an den vom Sammelkanal (46) abgewandten Enden eines der Kühlblöcke (40) ein ausserhalb der Kapselung (20) angeordneter Verbindungskanal (49) angebracht ist, der die Hohlräume (45) der Wärmeverteiler (42) miteinander verbindet.

## Claims

1. Encapsulated high-voltage switch, containing a heat-generating current conductor (10), a metal encapsulation (20) surrounding the current conductor (10), and a cooling element (30, 30') with a cooler (K, K'), which is fixed on a part of the encapsulation (20) that is embodied as a mounting plate (22), and which has cooling ribs (41) arranged outside the encapsulation, **characterized in that**, in a section of the cooler that is embodied as a cooling block (40), at least a portion of the cooling ribs (41) is arranged parallel to the mounting plate (22) and is held on a heat distributor (42) fixed to the mounting plate and embodied as a plate in such a way that on both sides of the heat distributor (42) in each case one of two groups of cooling channels (43) arises, in which the cooling channels (43) are in each case arranged in the manner of a sandwich and oriented in a manner inclined relative to the horizontal.

2. Switch according to Claim 1, **characterized in that** the heat distributor (42) is fixed to the mounting plate (22) by an edge (44) projecting from the cooling ribs (43).

3. Switch according to Claim 2, **characterized in that** a fixing element (50) that is led through the mounting plate (22) and rigidly connected to the mounting plate is formed into the edge (44).

4. Switch according to either of Claims 2 and 3, **characterized in that** the heat distributor (42) has a cavity (45) for the condensation of a vapor that transports the heat from the encapsulation (20) into the cooler (K).

5. Switch according to Claim 4, **characterized in that** a hollow lug (51) that is led through the mounting plate (22) and rigidly connected to the mounting plate is formed into the edge (44), said lug connecting the cavity (45) to an evaporator (31) of the cooling element (30), said evaporator being arranged in the interior of the encapsulation (20).

6. Switch according to either of Claims 4 and 5, **characterized in that** the heat distributor (42) and the portion of the cooling ribs (41) fixed to the heat distributor are produced as an extruded hollow profile.

7. Switch according to Claim 6, **characterized in that** the cooling block (40) has a section of the extruded profile that is cut to length and welded in a vacuum-tight manner to closure plates (52, 52') at the ends.

8. Switch according to any of Claims 4 to 7, **characterized in that** at least two cooling blocks (40) embodied substantially identically are fixed to the mounting plate (20), and **in that** a hollow collecting channel (46) is held on that side of the mounting plate (22) which faces away from the cooling blocks (40), said collecting channel being connected in a vacuum-tight manner to the cavity (45) of each of the two cooling blocks (40) and to the evaporator (31).

9. Switch according to Claim 8, **characterized in that** the collecting channel (46) has a tube connector (47) connected in a vacuum-tight manner to the evaporator (31), and also at least one connecting piece (48, 48') embodied in hollow fashion and serving for the vacuum-tight connection of an auxiliary device.

10. Switch according to either of Claims 8 and 9, **characterized in that** a connecting channel (49) arranged outside the encapsulation (20) is fitted to those ends of one of the cooling blocks (40) which face away from the collecting channel (46), said connecting channel connecting the cavities (45) of the heat distributors (42) to one another.

## Revendications

1. Commutateur haute tension encapsulé, comprenant un conducteur de courant (10) produisant de la chaleur, une encapsulation métallique (20) entourant le conducteur de courant (10) et un élément refroidissant (30, 30') muni d'un refroidisseur (K, K') qui est fixé à une partie de l'encapsulation (20) réalisée sous la forme d'une plaque de montage (22), et qui présente des nervures de refroidissement (41) disposées à l'extérieur de l'encapsulation, **caractérisé en ce que**, dans une section du refroidisseur réalisée sous la forme d'un bloc de refroidissement (40), au moins une partie des nervures de refroidissement (41) est disposée parallèlement à la plaque de montage (22) et est maintenue sur un répartiteur de chaleur (42) fixé à la plaque de montage et réalisé de sous la forme d'une plaque, de telle manière que l'un de deux groupes de canaux de refroidissement (43) soit présent de chaque côté du répartiteur de chaleur (42), les canaux de refroidissement (43) étant dans chaque cas disposés à la façon d'un sandwich et inclinés par rapport à l'horizontale.

2. Commutateur selon la revendication 1, **caractérisé en ce que** le répartiteur de chaleur (42) est fixé à la plaque de montage (22) par une arête (44) faisant saillie par rapport aux nervures de refroidissement (43).

3. Commutateur selon la revendication 2, **caractérisé en ce qu'**un élément de fixation (50) amené à traverser la plaque de montage (22) est formé dans l'arête (44) et est relié de manière rigide à la plaque de montage.

4. Commutateur selon l'une des revendications 2 ou 3, **caractérisé en ce que** le répartiteur de chaleur (42) comprend une cavité (45) destinée à la condensation d'une vapeur qui transporte la chaleur provenant de l'encapsulation (20) dans le refroidisseur (K).

5. Commutateur selon la revendication 4, **caractérisé en ce qu'**un ergot creux (51) qui est amené à traverser la plaque de montage (22) et est relié à la plaque de montage de manière rigide, est formé dans l'arête (44), ledit ergot creux reliant la cavité (45) à un évaporateur (31) de l'élément de refroidissement (30), ledit évaporateur étant disposé à l'intérieur de l'encapsulation (20).

6. Commutateur selon l'une des revendications 4 ou 5, **caractérisé en ce que** le répartiteur de chaleur (42) et la partie des nervures de refroidissement (41) qui est fixée au répartiteur de chaleur sont réalisés sous la forme d'un profil creux extrudé.

7. Commutateur selon la revendication 6, **caractérisé en ce que** le bloc de refroidissement (40) comprend une section du profil creux extrudée qui est tronçonnée et qui est soudée de manière étanche au vide par sa face avant à des plaques de fermeture (52, 52').

8. Commutateur selon l'une des revendications 4 à 7, **caractérisé en ce qu'**au moins deux blocs de refroidissement (40) réalisés de façon sensiblement identique sont fixés à la plaque de montage (20), et **en ce qu'**un canal de collecte creux (46) est maintenu sur un côté de la plaque de montage (22) qui est tournée à l'opposé des blocs de refroidissement (40), ledit canal de collecte étant relié de manière étanche au vide à la cavité (45) de chacun des deux blocs de refroidissement (40) et à l'évaporateur (31).

9. Commutateur selon la revendication 8, **caractérisé en ce que** le canal de collecte (46) comprend un raccord de tube (47) relié à l'évaporateur (31) de manière étanche au vide ainsi qu'au moins une pièce de raccordement (48, 48') réalisée de manière creuse pour le raccordement étanche au vide d'un dispositif auxiliaire.

10. Commutateur selon l'une des revendications 8 ou 9, **caractérisé en ce qu'**un canal de liaison (49) disposé à l'extérieur de l'encapsulation (20) est monté sur les extrémités de l'un des blocs de refroidissement (40) qui sont tournées à l'opposé du canal de collecte (46), ledit canal de liaison reliant l'une à l'autre les cavités (45) du répartiteur de chaleur (42).
